# EUROPÄISCHE PATENTSCHRIFT

(11) **EP 2 582 533 B1**
(45) Veröffentlichungstag und Bekanntmachung des Hinweises auf die Patenterteilung: **06.04.2016**
(21) Anmeldenummer: 11727395.3
(22) Anmeldetag: 01.06.2011
(51) Int. Cl.: B60G 17/016, B60G 17/0195

(54) **VERFAHREN ZUM BETREIBEN EINES KRAFTFAHRZEUGS, SOWIE KRAFTFAHRZEUG**
METHOD FOR OPERATING A MOTOR VEHICLE AND MOTOR VEHICLE
PROCÉDÉ PERMETTANT DE FAIRE FONCTIONNER UN VÉHICULE AUTOMOBILE, ET VÉHICULE AUTOMOBILE

(30) Priorität: 19.06.2010 DE 102010024387
(43) Veröffentlichungstag der Anmeldung: 24.04.2013
(73) Patentinhaber: Audi AG, 85045 Ingolstadt (DE)
(72) Erfinder: WEIN, Michael, 92358 Seubersdorf (DE)
(86) Internationale Anmeldenummer: PCT/EP2011/002698
(87) Internationale Veröffentlichungsnummer: WO 2011/157357

(56) Entgegenhaltungen:
- WO-A1-2011/144279
- JP-A- 4 126 622
- US-A- 5 557 525
- US-A1- 2003 111 812
- US-A1- 2008 183 353
- US-A1- 2010 105 520

## Beschreibung

Die Erfindung betrifft ein Verfahren zum Betreiben eines Kraftfahrzeugs, das die Eigenschaft hat, dass es in zumindest zwei Antriebsmodi fahrbar ist, wobei sich dieser Modi bezüglich zumindest eines Rades darin voneinander unterscheiden, ob dieses Rad angetrieben wird oder nicht. Sie betrifft auch ein Kraftfahrzeug.

Es sind z. B. der Antriebsmodi "Vorderradantrieb", "Heckantrieb" oder "Allradantrieb" bekannt.

Es kann nun sein, dass ein Kraftfahrzeugführer den Antriebsmodus beispielsweise durch eine Fahrereingabe verändert. Ebenfalls ist es möglich, dass eine Steuereinheit einen Wechsel des Antriebsmodus bewirkt, wie es häufig bei Hybridfahrzeugen der Fall ist, die neben einem Verbrennungsmotor auch einen elektrischen Antrieb aufweisen, der je nach Bedarf zu- oder abgeschaltet wird.

In Abhängigkeit von dem jeweiligen Antriebsmodus sind bezüglich einer Fahrwerkseinrichtung des Kraftfahrzeugs mitunter unterschiedliche Einstellungen notwendig, um ein optimales, sicheres Fahrverhalten zu gewährleisten.

Wird der Antriebsmodus verändert, so sind die auf die Fahrwerkseinrichtung bezogenen Einstellungen oftmals nicht mehr günstig für den neuen Antriebsmodus. Die Fahrsicherheit des Kraftfahrzeugs ist dann reduziert.

Die US 2003/0111812 A1 beschreibt ein Aufhängungsbaugruppe für ein Fahrzeug, die einen Rahmen mit zueinander beabstandeten oberen und unteren Querlenkern ("control arms") aufweist, die schwenkbar mit dem Rahmen verbunden sind. Ein Achsschenkel ist zwischen den Querlenkern gehaltert und unterstützt ein Rad. Die Ausrichtung des Achsschenkels definiert die Stellung des Rades, die den Nachlauf, Sturz, die Spur (and track) umfasst. Der Achsschenkel wird um seine Achse in Reaktion auf mechanische Eingaben von einem Lenkrad gedreht. Erste und zweite Aktuatoren können auf einem der Querlenker gehaltert und mit einem Abschnitt des Achsschenkels verbunden sein. Ein dritter Aktuator kann von dem anderen Querlenker gehaltert und mit einem anderen Abschnitt des Achsschenkels verbunden sein. Wenigstens ein Sensor erfasst Fahrzeugfahrbedingungen, wie Bremsen, Gierrate und Lenkposition. Eine Steuereinrichtung ist mit den Sensoren und den Aktuatoren verbunden, um in Reaktion auf die Fahrzeugfahrbedingungen die Aktuatoren anzuweisen, mindestens einen von Nachlauf, Sturz, Spur (and track) einzustellen.

Und die nicht vorveröffentlichte WO 2011/144279 A1 beschreibt ein Kraftfahrzeug, das mehrere Antriebsmodi haben kann, z.B. Heckantrieb, Allradantrieb, Frontantrieb. Eine aktive Fahrwerkseinrichtung wird dazu genutzt, abhängig vom Antriebsmodus unterschiedliche Einstellungen vorzunehmen, z.B. bezüglich des Spur- und Sturzwinkels eines Rades oder auch bezüglich von Radlasten. Dadurch kann das Fahrverhalten jeweils optimal auf den Antriebsmodus abgestimmt werden oder umgekehrt so gestaltet werden, dass sich ein Wechsel des Antriebsmodus für den Fahrer nicht spürbar auswirkt.

Das Dokument EP1826089 A2 offenbart ein Verfahren zum Betreiben eines Kraftfahrzeugs nach dem Oberbegriff des Anspruchs 1 und ein Kraftfahrzeug nach dem Oberbegriff des Anspruchs 4.

Es ist Aufgabe der vorliegenden Erfindung, ein Verfahren zum Betreiben eines Kraftfahrzeugs bereitzustellen, durch welches die Sicherheit im Fahrverhalten des Kraftfahrzeugs vergrößert wird.

Diese Aufgabe wird erfindungsgemäß durch ein Verfahren zum Betreiben eines Kraftfahrzeugs gemäß Patentanspruch 1 sowie durch ein Kraftfahrzeug gemäß Patentanspruch 4 gelöst.

Erfindungsgemäß wird bei einer Änderung des Antriebsmodus automatisch ein zuvor festgelegter, dem angelegten Antriebsmodus zugeordneter Wert einer auf eine Fahrwerkseinrichtung des Kraftfahrzeugs bezogenen Größe eingestellt, wobei die Größe ein Spurwinkel, ein Sturzwinkel oder ein Nachlaufwinkel eines Rades des Kraftfahrzeugs oder eine weitere kinematisch oder elastokinematisch änderbare Fahrwerksgröße ist, und wobei nur eine jeweilige Verstellposition der Größen für jeden Antriebsmodus gegeben ist. Hierdurch kann das Fahrverhalten des Kraftfahrzeugs stets dem aktuellen Antriebsmodus angepasst werden, wodurch die Sicherheit beim Fahrverhalten vergrößert wird.

Die Fahrwerkseinrichtungen können kostengünstig und einfach hergestellt werden, da die Verstellungen vergleichsweise langsam vorgenommen werden können. Es ist nicht nötig, ein teures, aktives Fahrwerk zu nutzen, wie es beispielsweise bei modernen Fahrzeugen verwendet wird, um dynamische Einstellungen vorzunehmen.

Im Gegensatz hierzu kann die Anzahl der möglichen Verstellungen, welche an der Fahrwerkseinrichtung vorgenommen wird, auf die gerade notwendige Zahl reduziert sein. Beispielsweise ist es denkbar, eine Fahrwerkseinrichtung zu nutzen, welche nur zwei verschiedene Verstellpositionen von für das Fahrverhalten wichtigen Größen ermöglicht, beispielsweise eine jeweilige Verstellposition der Größen für den Antriebsmodus "Vorderradantrieb" und eine weitere jeweilige Verstellposition für den Antriebsmodus "Heckantrieb". Es ist natürlich auch denkbar, kostengünstige Fahrwerkseinrichtungen zu nutzen, welche zusätzliche Einstellungen zulassen.

Vor der Fahrt kann zumindest einem Antriebsmodus ein Wert für zumindest eine auf eine Fahrwerkseinrichtung des Kraftfahrzeugs bezogene Größe zugeordnet werden. Der entsprechende Datensatz wird dann in dem Kraftfahrzeug hinterlegt. Auf diese Weise kann besonders einfach bei einem bestimmten Antriebsmodus der optimale Wert der auf die Fahrwerkseinrichtung des Kraftfahrzeugs bezogenen Größe eingestellt werden.

Die auf die Fahrwerkseinrichtung des Kraftfahrzeugs bezogene Größe ist ein Spurwinkel, ein Sturzwinkel oder ein Nachlaufwinkel eines Rades des Kraftfahrzeugs, allgemein Größen des Fahrwerks die durch eine Änderung der Kinematik oder Elastokinematik beeinflusst werden können. Diese Radstellungskenngrößen sind besonders wichtig für ein sicheres

Fahrverhalten und ermöglichen es, das Fahrzeug optimal auf den jeweiligen Antriebsmodus anzupassen.

Wenn der aktuelle Antriebsmodus mittels eines auf eine Radachse wirkenden Drehmoments festgestellt wird, kann einfach erkannt werden, wann der aktuelle Antriebsmodus verändert wird. Es ist natürlich auch vorstellbar, dass der aktuelle Antriebsmodus durch eine sowieso in dem Kraftfahrzeug vorhandene Überwachungseinrichtung festgestellt wird.

Ein erfindungsgemäßes Kraftfahrzeug ist in zumindest zwei Antriebsmodi fahrbar, welche sich bezüglich zumindest eines Rades des Kraftfahrzeugs darin voneinander unterscheiden, ob dieses oder ob es nicht angetrieben wird. Es erfasst des Weiteren eine Fahrwerkseinrichtung, die beim Betrieb des Fahrzeugs zumindest eine automatische Änderung bezüglich zumindest einer Einstellung ermöglicht. Eine Steuereinheit ist nun dazu ausgelegt, bei einer Änderung des Antriebsmodus automatisch einen dem aktuellen Antriebsmodus zugeordneten, zuvor festgelegten Wert einer auf eine Fahrwerkseinrichtung des Kraftfahrzeugs bezogenen Größe einzustellen, wobei nur eine jeweilige Verstellposition der Größen für jeden Antriebsmodus gegeben ist. Dadurch ist das Kraftfahrzeug auch bei einer Veränderung des Antriebsmodus weiterhin sicher fahrbar.

Die auf die Fahrwerkseinrichtung des Kraftfahrzeugs bezogene Größe ist ein Spurwinkel, ein Sturzwinkel oder auch ein Nachlaufwinkel eines Rades des Kraftfahrzeugs, allgemein Größen des Fahrwerks die durch eine Änderung der Kinematik oder Elastekinematik beeinflusst werden können. Ein Anpassen dieser Radstellgrößen an den jeweils aktuellen Antriebsmodus ermöglicht ein besonders sicheres Fahren des Kraftfahrzeugs.

In weiterer Ausgestaltung weist die Steuereinheit einen Speicher zum Ablegen von Daten auf, welche eine Zuordnung zumindest eines weiteren Antriebsmodus zu einem bestimmten Wert für die auf die Fahrwerkseinrichtung des Kraftfahrzeugs bezogene Größe wiedergeben. Die Steuereinheit ist dazu ausgelegt, beim Feststellen dieses Antriebsmodus die Fahrwerkseinrichtung so zu steuern, dass der dem Antriebsmodus zugeordnete Wert für die auf die Fahrwerkseinrichtung des Kraftfahrzeugs bezogene Größe eingestellt wird. Dadurch können besonders einfach die jeweils optimalen Werte der Größe für den jeweiligen aktuellen Antriebsmodus eingestellt werden.

Beispielsweise sind die Daten in Form einer Kennlinie, eines Kennfelds oder dergleichen in dem Speicher hinterlegt.

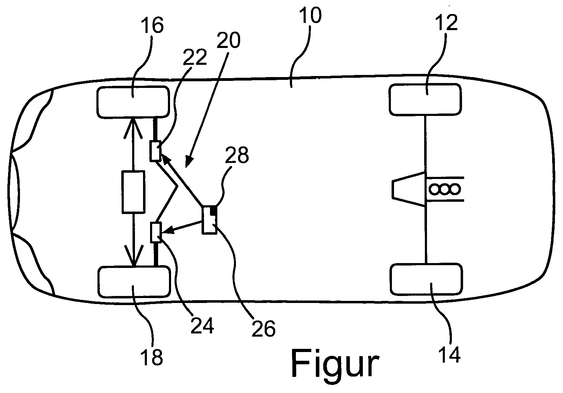

Nachfolgend wird eine bevorzugte Ausführungsform der Erfindung unter Bezug auf die Zeichnung beschrieben, wobei die Figur in einer schematischen Darstellung ein in wenigstens zwei Antriebsmodi fahrbares Kraftfahrzeug zeigt.

Ein Kraftfahrzeug 10 wird während einer Fahrt in einem "Heckantrieb" betrieben, bei welchem Hinterräder 12, 14 aktiv eingetrieben werden. In diesem Antriebsmodus werden Vorderräder 16, 18 des Kraftfahrzeugs 10 nicht aktiv angetrieben.

Zusätzlich weist das Kraftfahrzeug 10 eine Fahrwerkseinrichtung 20 auf, welche mittels Aktuatoren 22, 24 den Spurwinkel der Vorderräder 16, 18 einstellen können. Bei der Fahrt in dem Antriebsmodus "Heckantrieb" ist der Spurwinkel der Vorderräder 16, 18 nun optimal für diese Antriebsart eingestellt. Ändert nun der Fahrer oder ein Steuergerät die Antriebsart, so steuert eine Steuereinheit 26 der Fahrwerkseinrichtung 20 die Aktuatoren 22, 24 dergestalt an, dass der Spurwinkel der Vorderräder 16, 18 verändert wird. Hierfür ist in der Steuereinheit 26 ein Speicher 28 vorgesehen, in welchem beispielsweise in Form einer Kennlinie und eines Kennfelds verschiedenen Antriebsmodi jeweils vor der Fahrt festgelegte Wert für den Spurwinkel der Räder 16, 18 gespeichert sind.

Natürlich ist es auch vorstellbar, dass in ähnlicher Weise durch weitere Aktuatoren ein Sturzwinkel oder auch ein Nachlaufwinkel der Vorderräder 16, 18 oder auch der Hinterräder 12, 14 verändert werden. Ist das Fahrzeug auch im Allradantriebsmodus fahrbar, so können auch diesem Antriebsmodus spezielle Werte der Größen zugeordnet sein und beim Betreiben des Kraftfahrzeugs 10 in diesem Allradmodus durch Aktuatoren der Fahrwerkseinrichtung 20 eingestellt werden.

## Patentansprüche

1. Verfahren zum Betreiben eines Kraftfahrzeugs (10), das in zumindest zwei Antriebsmodi fahrbar ist, wobei die mindestens zwei Antriebsmodi auswählbar sind aus Vorderradantrieb, Hinterradantrieb und Allradantrieb,
**dadurch gekennzeichnet, dass** bei einer Änderung des Antriebsmodus automatisch ein zuvor festgelegter, dem aktuellen Antriebsmodus zugeordneter Wert einer auf eine Fahrwerkseinrichtung (20) des Kraftfahrzeugs (10) bezogenen Größe eingestellt wird, wobei die Größe ein Spurwinkel, ein Sturzwinkel oder ein Nachlaufwinkel eines Rades (12, 14, 16, 18) des Kraftfahrzeugs (10) oder eine weitere kinematisch oder elastokinematisch änderbare Fahrwerksgröße ist, und wobei nur eine jeweilige Verstellposition der Größen für jeden Antriebsmodus gegeben ist.

2. Verfahren nach Anspruch 1,
**dadurch gekennzeichnet, dass**
vor der Fahrt zumindest einem Antriebsmodus ein Wert für zumindest eine auf eine Fahrwerkseinrichtung (20) des Kraftfahrzeugs (10) bezogene Größe zugeordnet und ein entsprechender Datensatz in dem Kraftfahrzeug (10) hinterlegt wird.

3. Verfahren nach einem der vorhergehenden Ansprüche,
**dadurch gekennzeichnet, dass**
der aktuelle Antriebsmodus mittels eines auf eine Radachse wirkendes Drehmoments festgestellt wird.

4. Kraftfahrzeug (10), welches in zumindest zwei Antriebsmodi fahrbar ist, wobei die mindestens zwei Antriebsmodi auswählbar sind aus Vorderradantrieb, Hinterradantrieb und Allradantrieb, und mit einer Fahrwerkseinrichtung (20), die beim Betrieb des Fahrzeugs (10) zumindest eine automatische Änderung bezüglich zumindest einer Einstellung ermöglicht,
**gekennzeichnet durch**
eine Steuereinheit (26), welche dazu ausgelegt ist, bei einer Änderung des Antriebsmodus automatisch einen dem aktuellen Antriebsmodus zugeordneten, zuvor festgelegten Wert einer auf die Fahrwerkseinrichtung (20) des Kraftfahrzeugs (10) bezogenen Größe einzustellen, wobei die Größe ein Spurwinkel, ein Sturzwinkel oder ein Nachlaufwinkel eines Rades (12, 14, 16, 18) des Kraftfahrzeugs (10) oder eine weitere kinematisch oder elastokinematisch änderbare Fahrwerksgröße ist, und wobei nur eine jeweilige Verstellposition der Größen für jeden Antriebsmodus gegeben ist.

5. Kraftfahrzeug (10) nach Anspruch 4,
**dadurch gekennzeichnet, dass**
die Steuereinheit (24) einen Speicher (26) zum Ablegen von Daten aufweist, welche eine Zuordnung zumindest eines bestimmten Antriebsmodus zu einem bestimmten Wert für die auf die Fahrwerkseinrichtung (20) des Kraftfahrzeugs (10) bezogene Größe wiedergeben, und dass die Steuereinheit (24) dazu ausgelegt ist, beim Feststellen dieses Antriebsmodus die Fahrwerkseinrichtung (20) so zu steuern, dass der dem Antriebsmodus zugeordnete Wert für die auf die Fahrwerkseinrichtung (20) des Kraftfahrzeugs (10) bezogene Größe eingestellt wird.

6. Kraftfahrzeug (10) nach Anspruch 5,
**dadurch gekennzeichnet, dass**
die Daten in Form einer Kennlinie, eines Kennfelds oder dergleichen in dem Speicher (26) hinterlegt sind.

## Claims

1. Method for operating a motor vehicle (10) which can be driven in at least two drive modes, wherein the at least two drive modes can be selected from front-wheel drive, rear-wheel drive and all-wheel drive, **characterised in that** when the drive mode is changed a value assigned to the current drive mode which is a previously determined value of a variable related to a suspension device (20) of the motor vehicle (10) is automatically adjusted, wherein the variable is a toe angle, a camber angle or a castor angle of a wheel (12, 14, 16, 18) of the motor vehicle (10) or an additional kinematically or elastokinematically adjustable suspension variable and wherein only one adjustment position of the variables is defined for each drive mode.

2. Method according to claim 1, **characterised in that** before travel a value for at least one variable related to a suspension device (20) of the motor vehicle (10) is assigned to at least one drive mode, and a corresponding data set is saved in the motor vehicle (10).

3. Method according to any one of the preceding claims, **characterised in that** the current drive mode is determined by means of a torque operating on a wheel axle.

4. Motor vehicle (10) which can be driven in at least two drive modes, wherein the at least two drive modes can be selected from front-wheel drive, rear-wheel drive and all-wheel drive, and with a suspension device (20) which allows at least one automatic adjustment with respect to at least one adjustment during the operation of the motor vehicle (10), **characterised by** a control unit (26) which is configured to automatically adjust when a drive mode is changed a value assigned to the current drive mode which is a previously determined value of a variable related to a suspension device (20) of the motor vehicle (10), wherein the variable is a toe angle, a camber angle or a castor angle of a wheel (12, 14, 16, 18) of the motor vehicle (10) or an additional kinematically or elastokinematically adjustable suspension variable and wherein only one adjustment position of the variables is defined for each drive mode.

5. Motor vehicle (10) according to claim 4, **characterised in that** the control unit (24) comprises a memory (26) for storing data representing an association of at least one specific drive mode to a specific value for the variable related to the suspension device (20) of the motor vehicle (10), and **in that** the control unit (24) is configured to control the suspension device (20) upon detection of said drive mode, so that the value associated with the drive mode for the variable related to the suspension device (20) of the motor vehicle (10) is adjusted.

6. Motor vehicle (10) according to claim 5, **characterised in that** the data are stored in the memory (26) in the form of a characteristic curve, a characteristic curve field or the like.

## Revendications

1. Procédé de fonctionnement d'un véhicule automobile (10), qui peut se déplacer en au moins deux modes de fonctionnement, dans lequel les au moins deux modes de fonctionnement peuvent être choisis entre la traction avant, la traction arrière et la traction 4 x 4,
**caractérisé en ce que**, lors d'une modification du mode de fonctionnement, on règle automatiquement une valeur précédemment fixée affectée au mode de fonctionnement en cours d'une grandeur se référant à un dispositif de roulement (20) du véhicule automobile (10), dans lequel la grandeur est un angle de pincement, un angle de carrossage ou un angle de chasse d'une roue (12, 14, 16, 18) du véhicule automobile (10) ou une autre grandeur du mécanisme de roulement modifiable au plan cinématique ou élastocinématique et dans lequel il y a seulement une position de réglage respective des grandeurs pour chaque mode de fonctionnement.

2. Procédé selon la revendication 1,
**caractérisé en ce que** :
avant le démarrage, on affecte au moins à un mode de fonctionnement une valeur pour au moins une grandeur se référant à un dispositif de roulement (20) du véhicule automobile (10) et un jeu de données correspondant est mémorisé dans le véhicule automobile (10).

3. Procédé selon l'une quelconque des revendications précédentes,
**caractérisé en ce que** :
le mode de fonctionnement en cours est établi au moyen d'un couple de torsion opérant sur un essieu de roue.

4. Véhicule automobile (10), qui peut se déplacer dans au moins deux modes de fonctionnement, dans lequel les au moins deux modes de fonctionnement peuvent être choisis entre la traction avant, la traction arrière et la traction 4 x 4, et avec un dispositif de roulement (20), qui permet, lors du fonctionnement du véhicule (10), au moins une modification automatique se référant au moins à un réglage,
**caractérisé par** :
une unité de commande (26) qui est conçue de manière à régler automatiquement, lors d'une modification du mode de fonctionnement, une valeur précédemment fixée affectée au mode de fonctionnement en cours d'une grandeur se référant au dispositif de roulement (20) du véhicule automobile (10), dans lequel la grandeur est un angle de pincement, un angle de carrossage ou un angle de chasse d'une roue (12, 14, 16, 18) du véhicule automobile (10) ou une autre grandeur de roulement modifiable par voie cinématique ou élastocinématique et dans lequel il y a seulement une position de réglage respective des grandeurs pour chaque mode de fonctionnement.

5. Véhicule (10) selon la revendication 4,
**caractérisé en ce que** :
l'unité de commande (24) présente une mémoire (26) pour stocker des données, qui reproduisent une affectation au moins d'un mode de fonctionnement déterminé à une valeur déterminée pour la grandeur se référant au dispositif de roulement (20) du véhicule automobile (10) et l'unité de commande (24) est conçue de manière à commander, lors de l'établissement de ce mode de fonctionnement, le dispositif de roulement (20) de sorte que la valeur affectée au mode de fonctionnement soit réglée pour la grandeur se référant au dispositif de roulement (20) du véhicule automobile (10).

6. Véhicule automobile (10) selon la revendication 5,
**caractérisé en ce que** :
les données sont mémorisées sous la forme d'une ligne caractéristique, d'un champ caractéristique ou similaire dans la mémoire (26).
